# EUROPÄISCHE PATENTSCHRIFT

(11) **EP 1 365 494 B1**
(45) Veröffentlichungstag und Bekanntmachung des Hinweises auf die Patenterteilung: **04.07.2007**
(21) Anmeldenummer: 03010610.8
(22) Anmeldetag: 12.05.2003
(51) Int. Cl.: H02G 3/18, H02G 3/06

(54) **Kabeldurchführung an einem Elektrogerät**
Cable feedthrough for an electrical device
Passe-câble pour un appareil électrique

(30) Priorität: 24.05.2002 DE 10223198
(43) Veröffentlichungstag der Anmeldung: 26.11.2003
(73) Patentinhaber: SIEMENS AKTIENGESELLSCHAFT, 80333 München (DE)
(72) Erfinder: Müller, Frank, 91341 Röttenbach (DE)

(56) Entgegenhaltungen:
- DE-B- 1 061 861
- DE-C- 737 336
- GB-A- 2 250 644

## Beschreibung

Die Erfindung betrifft eine Kabeldurchführung an einem Elektrogerät, insbesondere in einem Schienenfahrzeug, mit einem in einer Öffnung des Elektrogerätes gehaltenen Kabelführungsrohr mit Außengewinde, auf das eine Druckschraube mit einem Innengewinde aufschraubbar ist zum Anpressen eines ein Kabel umgebendes Kabelrohres an mindestens eine Anlagefläche des Kabelführungsrohres.

Eine derartige Kabeldurchführung ist z.B. aus DE-A-1 061 861 bekannt.

Bei derartigen Kabeldurchführungen ist es erforderlich, dass Personen im Betriebszustand nicht mit stromführenden Bauteilen in Berührung kommen können. Selbst bei einer Beschädigung des Kabels soll ausgeschlossen sein, dass Teile der Kabeldurchführung ein gefährliches elektrisches Potential aufweisen.

Bisher sind verschiedenartige Lösungen vorgeschlagen worden. Zum Beispiel können die gewindetragenden Bauteile aus einem elektrisch isolierenden Stoff, z.B. Kunststoff, hergestellt sein. Solche Verschraubungen sind jedoch nicht sehr stabil. Bei Verwendung von gewindetragenden Bauteilen aus Metall wurden bisher besondere Erdungsleitungen vorgesehen, die ein bei beschädigtem Kabel zur Kabeldurchführung gelangendes elektrisches Potential ableiten konnten. Dazu dienten entweder extra geerdete Kabelverschraubungsplatten, die mit den Gewinden in Kontakt gebracht wurden oder nach erfolgter Verschraubung wurde ein Erdungskabel erst mit einem zusätzlichen Arbeitsschritt im Bereich der Verschraubung angebracht.

Der Erfindung liegt die Aufgabe zugrunde, eine stabile verschleißarme Kabeldurchführung anzugeben, die mit einfachen Mitteln gefährliche elektrische Potentiale von Personen fern zu halten gestattet.

Die Aufgabe wird gemäß der Erfindung dadurch gelöst, dass sich das Außengewinde und das Innengewinde in Metallbauteilen befinden, dass das Kabelführungsrohr zumindest außerhalb des Elektrogerätes außer am Außengewinde mit einem Isolierstoff überzogen ist und dass an die Druckschraube eine Hülse aus Isolierstoff angeformt ist, die das das Innengewinde tragende Metallbauteil überdeckt und sich über dessen Ende hinaus im verschraubten Zustand das Außengewinde des Kabelführungsrohres überdeckend erstreckt.

Mit der Kabeldurchführung nach der Erfindung wird der Vorteil erzielt, dass einerseits die ineinander greifenden Gewinde in Metallbauteilen angeordnet sind, so dass eine stabile, verschleißarme Verbindung stets gewährleistet ist, und dass andererseits ohne zusätzliche Bauteile, die einen separaten Arbeitsschritt beim Aufbau der Kabeldurchführung erfordern würden, alle möglicherweise ein gefährliches elektrisches Potential aufweisenden Bauteile der Kabeldurchführung im montierten Zustand isoliert sind. Die Sicherheit des Personals ist also vorteilhafterweise mit einfachen Mitteln gewährleistet, ohne dass auf eine stets stabile, verschleißarme Schraubverbindung verzichtet werden müsste.

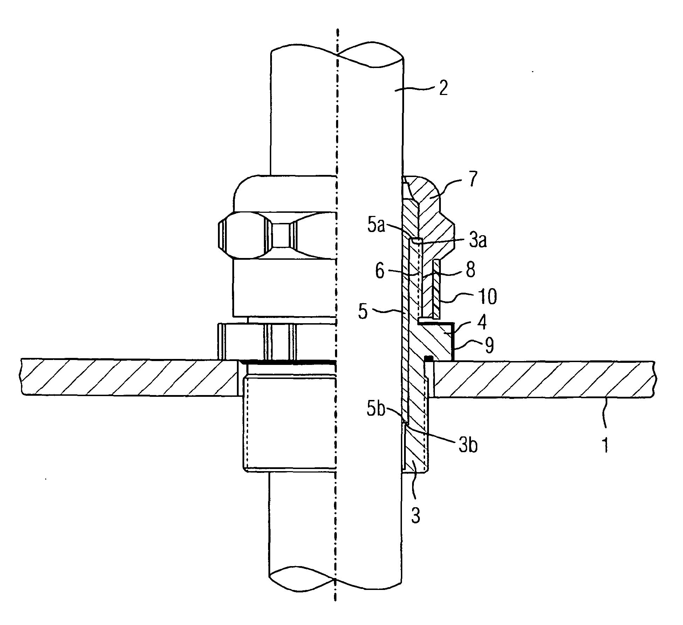

Ein Ausführungsbeispiel für die Kabeldurchführung nach der Erfindung wird anhand der Zeichnung näher erläutert:

Von einem Elektrogerät, das sich beispielsweise in einem Schienenfahrzeug befindet, ist nur eine Wand 1 dargestellt. Ein elektrisches Kabel 2 ist von außen kommend durch diese Wand 1 hindurch geführt. Dazu ist eine Kabeldurchführung vorgesehen. Sie weist ein Kabelführungsrohr 3 auf, das mit einer Anformung 4 von außen an der Wand 1 anliegt. Das Kabel 2 ist im Bereich der Kabeldurchführung von einem Kabelrohr 5 umgeben. Dieses Kabelrohr 5 weist Anlageflächen 5a, 5b auf, die im montierten Zustand der Kabeldurchführung mit Anlageflächen 3a, 3b des Kabelführungsrohres 3 korrespondieren. Ausnehmungen oder Anformungen des Kabelrohres 5 bzw. des Kabelführungsrohres 3 bilden die Anlageflächen 5a bzw. 3b, während Stirnflächen des Kabelführungsrohres 3 bzw. des Kabelrohres 5 die korrespondierenden Anlageflächen 3a bzw. 5b bilden.

Am im montierten Zustand außerhalb des Elektrogerätes angeordneten Teil des Kabelführungsrohres 3 ist ein Außengewinde 6 angebracht. Damit dieses Außengewinde 6 stabil und verschleißarm ist, ist zumindest der Teil des Kabelführungsrohres 3, der das Gewinde trägt, ein Metallbauteil.

Im montierten Zustand ist auf das Außengewinde 6 des Kabelführungsrohres 3 eine Druckschraube 7 mit Innengewinde 8 aufgeschraubt. Die Druckschraube 7 ist außerhalb des Elektrogerätes mit einer Öffnung über das Kabel 2 geschoben und wird beim Aufschrauben auf das Kabelführungsrohr 3 gegen das Kabelrohr 5 gepresst, wodurch dieses mit seinen Anlageflächen 5a, 5b gegen die korrespondierenden Anlageflächen 3a, 3b des Kabelführungsrohres 3 gedrückt wird. Auf diese Weise ist eine stabile Verbindung des Kabels 2 mit dem Kabelführungsrohr 3 und damit mit der Wand 1 des Elektrogerätes gegeben.

Damit bei einer Beschädigung des Kabels 2 und/oder bei sonstigem Kontaktieren des Kabelführungsrohres 3 mit elektrischem Potential ein für Personen schädliches elektrisches Potential nicht an die äußere Oberfläche der montierten Kabeldurchführung gelangen kann, ist das Kabelführungsrohr 3 teilweise mit einer Schicht 9 aus Isolierstoff überzogen. Dieser Isolierstoff ist ein elektrischer Isolator, z.B. Kunststoff. Die Schicht erstreckt sich über alle Oberflächen des Kabelführungsrohres 3, die nach der Montage der Kabeldurchführung außerhalb der Wand 1 angeordnet sind, jedoch nicht über das Außengewinde 6. Es kann auch das gesamte Kabelführungsrohr 3 mit einer solchen Schicht 9 beschichtet sein, sofern nur das Außengewinde 6 frei bleibt.

Zumindest das Teilstück der Druckschraube 7, das das Innengewinde 8 trägt, ist ein Metallbauteil. Es kann jedoch auch die gesamte Druckschraube 7 aus Metall bestehen. An die Druckschraube 7 ist eine Hülse 10 aus Isolierstoff angeformt, die von außen dieses das Innengewinde 8 tragende Metallbauteil überdeckt und sich darüber hinaus, wenn die Kabeldurchführung montiert ist, so weit in Richtung auf die Wand 1 erstreckt, dass stets auch das gesamte Außengewinde 6 am Kabelführungsrohr 3 überdeckt ist. Dieser Isolierstoff ist ebenfalls ein elektrischer Isolator, z.B. Kunststoff.

Sollte die gesamte Druckschraube 7 aus Metall bestehen, ist diese zumindest von außen nicht jedoch am Innengewinde 8 mit einer Schicht aus Isolierstoff, z.B. Kunststoff, überzogen.

Bei montierter Kabeldurchführung ist sichergestellt, dass außerhalb des Elektrogerätes keine metallischen Bestandteile der Kabeldurchführung von Personen berührt werden können. Die Personen sind also vor gefährlichen elektrischen Potentialen geschützt, ohne dass aufwendige Maßnahmen notwendig wären. Trotzdem ist eine stabile Verschraubung über Gewinde in metallischen Bauteilen gegeben.

## Patentansprüche

1. Kabeldurchführung an einem Elektrogerät, insbesondere in einem Schienenfahrzeug, mit einem in einer Öffnung des Elektrogerätes gehaltenen Kabelführungsrohr (3) mit Außengewinde (6), auf das eine Druckschraube (7) mit einem Innengewinde (8) aufschraubbar ist zum Anpressen eines ein Kabel (2) umgebendes Kabelrohres (5) an mindestens eine Anlagefläche (3a, 3b) des Kabelführungsrohres (3),
**dadurch gekennzeichnet, dass** sich das Außengewinde (6) und das Innengewinde (8) in Metallbauteilen befinden, dass das Kabelführungsrohr (3) zumindest außerhalb des Elektrogerätes außer am Außengewinde (6) mit einem Isolierstoff überzogen ist und dass an die Druckschraube (7) eine Hülse (10) aus Isolierstoff angeformt ist, die das das Innengewinde (8) tragende Metallbauteil überdeckt und sich über dessen Ende hinaus im verschraubten Zustand das Außengewinde (6) des Kabelführungsrohres (3) überdeckend erstreckt.

## Claims

1. Cable bushing on an electrical device, in particular in a rail-mounted vehicle, having a cable feed tube (3), which is held in an opening of the electrical device, with an outer thread (6), onto which a clamping screw (7) with an inner thread (8) can be screwed for the purpose of pressing a cable tube (5), which surrounds a cable (2), against at least one bearing face (3a, 3b) of the cable feed tube (3), **characterized in that** the outer thread (6) and the inner thread (8) are located in metal components, **in that** the cable feed tube (3) is coated with an insulating material at least outside the electrical device, apart from on the outer thread (6), and **in that** a sleeve (10) consisting of insulating material is integrally formed on the clamping screw (7), covers the metal component bearing the inner thread (8) and extends beyond the end of said metal component, in the screwed state, so as to cover the outer thread (6) of the cable feed tube (3).

## Revendications

1. Passe-câble sur un appareil électrique notamment dans un véhicule ferroviaire, comprenant un tube (3) de passage de câble, qui est retenu dans une ouverture de l'appareil électrique, qui a un filetage (6) et sur lequel peut être vissée une vis (7) de serrage ayant un taraudage (8) pour presser un tube (5) de câble entourant un câble (2) sur au moins une surface (3a, 3b) de contact du tube (3) de passage de câble,
**caractérisé en ce que** le filetage (6) et le taraudage (8) se trouvent dans des pièces métalliques, **en ce que** le tube (3) de passage de câble est revêtu, au moins en dehors de l'appareil électrique, extérieurement sur le filetage (6) d'une matière isolante et **en ce qu'**il est formé sur la vis (7) de serrage une douille (10) en matière isolante, qui recouvre la pièce métallique portant le taraudage (8) et qui, à l'état vissé, s'étend au delà de celle-ci en recouvrant le filetage (6) du tube (3) de passage de câble.
